# EUROPEAN PATENT APPLICATION

(11) **EP 1 742 498 A1**
(43) Date of publication of application: **10.01.2007**
(21) Application number: 05730616.9
(22) Date of filing: 18.04.2005
(51) Int. Cl.: H04Q 7/36

(54) **CONTROL STATION APPARATUS, BASE STATION APPARATUS, RECEIVING METHOD, TRANSMITTING METHOD AND COMMUNICATING METHOD**

(30) Priority: 28.04.2004 JP 2004132976
(71) Applicant: MATSUSHITA ELECTRIC INDUSTRIAL CO., LTD., Osaka 571-8501 (JP)
(72) Inventor: FUKUI, Akito., c/o Matsushita El.Ind.Co.Ltd, Osaka-shi, Osaka 540-6319 (JP)
(74) Representative: Grünecker, Kinkeldey, Stockmair & Schwanhäusser Anwaltssozietät
(86) International application number: PCT/JP2005/007396
(87) International publication number: WO 2005/107301

(57) **Abstract**

A control station apparatus capable of suppressing an increase of the traffic amount and also capable of preventing an increase of overheads during data transfer even when the transmission time interval is shortened. In this apparatus, a data frame processing part (102) makes up a MAC-d PDU from an EDCH FP MDC data frame. A control frame processing part (103), in amacro-diversity communication state, selects, from the EDCH FP MDC control frames of a plurality of Nodes B, frames having the same SN, compares CRC results and estimation bit error rates, and selects a frame in which the CRC result is OK and the estimation bit error rate is small. The control frame processing part (103) then makes up an EDCH FP control response frame in which ACK has been established for Nodes B to which the selected frame can be transmitted, while making up an EDCH FP control response frame in which Flash has been established for the other Nodes B.

## Description

### Technical Field

The present invention relates to a control station apparatus, base station apparatus, reception method, transmission method and communication method that particularly provide high-speed packet communication service.

### Background Art

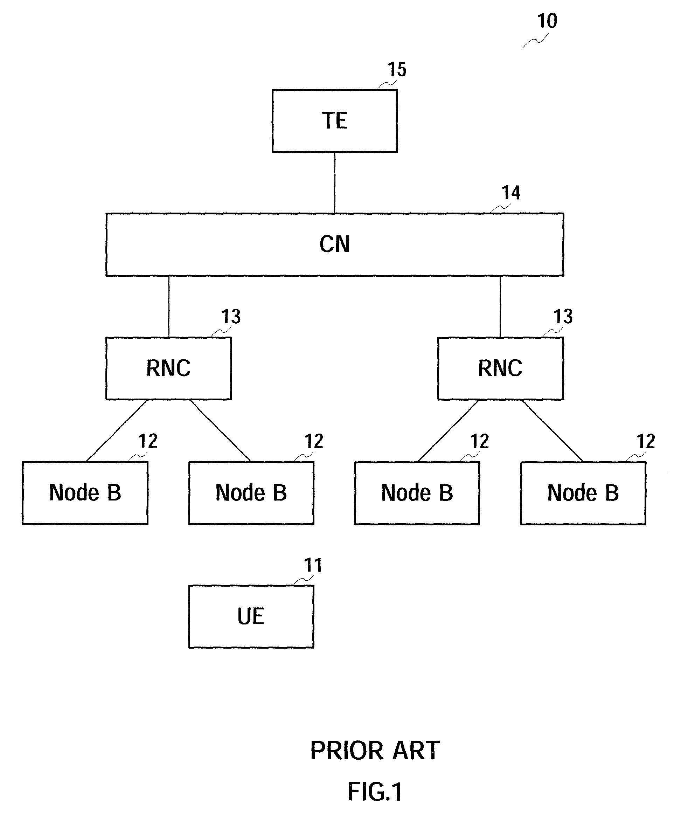

As shown in FIG.1, packet communication system 10 is comprised of mobile terminal (hereinafter referred to as "UE") 11, base station apparatuses (hereinafter each referred to as "Nodes B") 12, radio network control apparatuses (hereinafter each referred to as "RNCs") 13 that control a plurality of Nodes B 12, core network (hereinafter referred to as "CN") 14 that performs position management, call connection control and the like on UE 11, and communicating party (hereinafter referred to as "TE") 15 of UE 11. Each RNC 13 is connected to a plurality of Nodes B 12, and Node B 12 is connected to a plurality of UEs 11.

In UMTS (Universal Mobile Telecommunications System) using a WCDMA (Wideband Code Division Multiple Access) scheme as a radio scheme, UE 11 can simultaneously set radio channels with a plurality of Nodes B12 and perform macro diversity communication. In this case, signals received in a plurality of Nodes B 12 are transmitted to higher RNC 13, and RNC 13 selects the signal with the best communication quality and transmits the signal to CN 14.

Referring to FIG.1, the operation when data is transferred on uplink in the conventional mobile communication system will be described next. Data generated in the application of UE 11 is assembled into IP packets and transmitted to Node B12. Node B 12 performs baseband processing and the like for wireless transmission by WCDMA, and performs processing such as demodulation, HARQ decoding/error correction and the like. Further, Node B 12 performs processing for layer 2 (hereinafter referred to as "L2") and processing for layer 1 (hereinafter referred to as "L1") for wired transmission, and transmits the results to RNC 13 via Iub/Iur interface. When macro diversity communication is performed among a plurality of Nodes B 12, RNC 13 selects the packets with the best communication quality from the packets received from the plurality of Nodes B 12 and reconstructs IP packets.

Further, as the conventional mobile communication system, such a downlink mobile communication system has been known that a packet control node relays packets between a terrestrial network and radio network (see, for example, Patent Document 1). In this mobile communication system, according to the state of the present downlink transmission rate of the radio channel for each UE, Node B reports to the control node a request regarding the transmission rate of packets for UE, and the packet control node receiving the report transfers packets for UE to Node B at the requested transfer rate.
Patent Document 1: Japanese Patent Application Laid-OpenNo.2002-171572

### Disclosure of Invention

### Problems to be Solved by the Invention

However, in the conventional apparatus, when the high-speed technique is applied on the uplink radio channel and further, UE performs macro diversity communication with a plurality of Nodes B, since a plurality of Nodes B transmit packets to RNC, a problem arises that the amount of traffic increases between Nodes B and RNC. Particularly, when the data rate is increased on the uplink radio channel, the amount of packets transmitted from the Nodes B to RNC also increases, and a problem occurs that the amount of traffic increases substantially.

Further, in the conventional apparatus, when the high-speed technique is applied on the uplink radio channel, the transmission time interval (TTI) on the uplink radio channel becomes shorter than the conventional technique. Therefore, Node B transmits data to RNC at transmission time intervals shorter than the conventional technique, and problems arise that the number of frames to be processed by RNC per unit time increases and overhead of IP headers and the like increases in data transfer.

It is therefore an object of the present invention to provide a control station apparatus, base station apparatus, reception method, transmission method and communication method capable of reducing increase in the amount of traffic, and preventing increase in overhead in data transfer even when transmission time intervals are made shorter.

### Means for Solving the Problem

The control station apparatus of the present invention adopts a configuration having: an acquirer that receives, from base station apparatuses, a control information portion of packet data including information of a data portion of the packet data, before receiving the data portion; a control frame processor that instructs a base station apparatus transmitting the quality information of best quality to transmit the data portion, among the quality information indicating quality of the data portion included in the control information portion received in the acquirer; and a data frame processor that performs predetermined protocol processing on the data portion transmitted from the base station apparatus instructed by the control frame processor to transmit the data portion.

The base station apparatus of the present invention adopts a configuration having: a quality information generator that generates quality information comprising information indicating quality of a data portion of packet data; a data frame processor that generates the data portion of the packet data to transmit to a control station apparatus; a control frame processor that generates a control information portion of the packet data including the quality information generated in the quality information generator; and a transmitter that transmits the control information portion generated in the control frame processor and the data portion generated in the data frame processor to the control station apparatus, and, in this base station apparatus, the control frame processor performs control such that the transmitter transmits the data portion when information is received indicating that the quality information included in the control information portion transmitted from the transmitter is better than the quality information for another base station apparatus.

The reception method of the present invention has the steps of: receiving, from base station apparatuses, a control information portion of packet data including information of a data portion of the packet data, before receiving the data portion; instructing a base station apparatus transmitting the quality information of best quality to transmit the data portion, among the quality information indicating quality of the data portion included in the control information portion received; and performing predetermined protocol processing on the data portion transmitted from the base station apparatus instructed to transmit the data portion.

The transmission method of the present invention has the steps: generating quality information comprising information indicating quality of a data portion of packet data; generating the data portion of the packet data to transmit to a control station apparatus; generating a control information portion of the packet data including the generated quality information; and transmitting the generated control information portion and data portion to the control station apparatus, and, in this transmission method, control is performed such that the data portion is transmitted when information is received indicating that the quality information included in the transmitted control information portion is better than the quality information for another base station apparatus.

The communication method of the present invention has the steps of: generating a data portion of packet data to transmit to a control station apparatus; generating quality information comprising information indicating quality of the data portion; generating a control information portion of the packet data including the generated quality information and information of the data portion; transmitting the generated control information portion to the control station apparatus from a plurality of base station apparatuses; receiving in the control station apparatus the control information portion from the plurality of base station apparatuses; instructing a base station apparatus transmitting the quality information of best quality to transmit the data portion, among the quality information indicating quality of the data portion included in the control information portion received; and transmitting the data portion from the base station instructed by the control station apparatus to transmit the data portion; and performing predetermined protocol processing on the data portion transmitted from the base station apparatus instructed to transmit the data portion.

### Advantageous Effect of the Invention

According to the present invention, it ispossible to reduce increase in the amount of traffic and prevent increase in overhead in data transfer even when transmission time intervals are made shorter.

### Brief Description of Drawings

FIG.1 is a diagram illustrating a configuration of a mobile communication system;
FIG.2 is a block diagram illustrating a configuration of a control station apparatus according to Embodiment 1 of the present invention;
FIG.3 is a block diagram illustrating a configuration of a base station apparatus according to Embodiment 1 of the present invention;
FIG.4 is a block diagram illustrating a configuration of a mobile terminal according to Embodiment 1 of the present invention;
FIG.5 is a block diagram illustrating a configuration of a core network according to Embodiment 1 of the present invention;
FIG.6 is a block diagram illustrating a configuration of a communicating party of the mobile terminal according to Embodiment 1 of the present invention;
FIG.7 is a block diagram illustrating a protocol configuration according to Embodiment 1 of the present invention;
FIG.8 is a diagram illustrating an EDCH FPMDC control frame according to Embodiment 1 of the present invention;
FIG.9 is a diagram illustrating an EDCH FP MDC control response frame according to Embodiment 1 of the present invention;
FIG.10 is a diagram illustrating an EDCH FP MDC data frame according to Embodiment 1 of the present invention;
FIG.11 is a block diagram illustrating a configuration of a control station apparatus according to Embodiment 2 of the present invention;
FIG.12 is a block diagram illustrating a configuration of a data frame processing section according to Embodiment 2 of the present invention; and
FIG.13 is a diagram illustrating an EDCH FP MDC data frame according to Embodiment 2 of the present invention.

### Best Mode for Carrying Out the Invention

Currently, 3GPP (3^{rd} Generation Partnership Project) has conducted studies on EDCH (Enhanced Dedicated Channel) technique that realizes high speed uplink packet communication. EDCH is a new technique, the standardization of which is in progress by 3GPP, and which realizes high speed uplink radio channel from UE to Node B by applying to radio interface an adaptive modulation scheme, HARQ (Hybrid Automatic Repeat Request) scheme, high-speed selection of communication destination users, and method for changing transmission parameters adaptively according to the condition of the radio channel and the like.

Embodiments of the present invention will be described in detail below with reference to the accompanying drawings.

### (Embodiment 1)

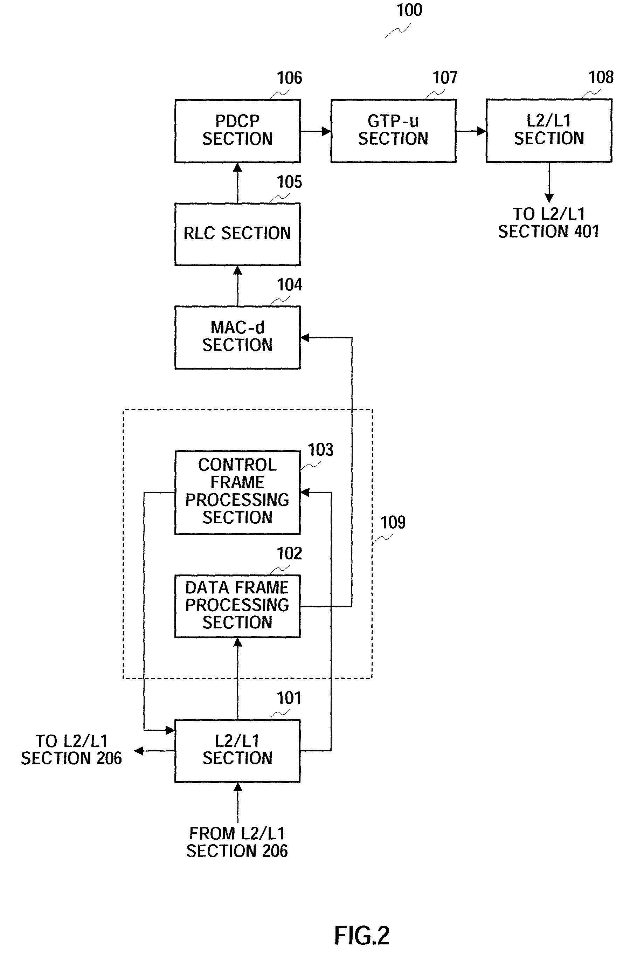

FIG.2 is a block diagram illustrating a configuration of RNC 100 according to Embodiment 1 of the present invention. Data frame processing section 102 and control frame processing section 103 form EDCH FP (Frame Protocol for Enhanced Dedicated Channel) section 109.

L2/L1 section 101 is an acquiring means and performs processing for layer 2 (hereinafter referred to as "L2") and processing for layer 1 (hereinafter referred to as "L1") for wired transmission on packet data inputted from Node B (described later), and reconstructs an EDCH FP MDC data frame (data portion) or an EDCH FP MDC control frame (control information portion). L2/L1 section 101 first receives the EDCH FP MDC control frame and then receives the EDCH FP MDC data frame. Then, L2/L1 section 101 outputs the reconstructed EDCH FP MDC data frame to data frame processing section 102, and outputs the reconstructed EDCH FP MDC control frame to control frame processing section 103. Further, L2/L1 section 101 performs the processing of L2 and processing of L1 on an EDCH FP MDC control response frame inputted from control frame processing section 103 and transmits the result to Node B.

Data frame processing section 102 assembles MAC-d PDU by performing EDCH FP processing, which is predetermined protocol processing, on the EDCH FP MDC data frame inputted from L2/L1 section 101, and outputs the assembled MAC-d PDU to MAC-d section 104. The EDCH FPMDC data frame inputted to data frame processing section 102 is transmitted from Node B instructed to transmit the EDCH FP MDC data frame by control frame processing section 103 (described later).

When the EDCH FP MDC control frame is inputted from L2/L1 section 101, based on CRC result information (quality information: hereinafter referred to as "CRCI") and estimated quality information (quality information: hereinafter referred to as "QE") set in the EDCH FP MDC control frame, control frame processing section 103 generates an EDCH FP MDC control response frame set with one of ACK, NACK and Flash as "HARQ operation," which is data processing instruction information corresponding to a sequence number (hereinafter referred to "SN"), and outputs the EDCH FP MDC control response frame to L2/L1 section 101. Further, control frame processing section 103 selects frames with the same SN fromEDCH FPMDC control frames of a plurality of Nodes B inputted fromL2/L1 section 101 in macro diversity communication state and compares the CRCIs, and, when there are frames with good CRCIs, further compares the QEs such as information of estimated bit error rate and the like and selects the frame with the best quality, that is , the frame with the lowest estimatedbit error rate. Then, control frame processing section 103 assembles an EDCH FP control response frame with the SN of the selected frame and ACK set therein, and outputs the assembled EDCH FP control response frame to L2/L1 section 101 so as to instruct Node B that transmitted the frame with the lowest estimated bit error rate, to transmit an EDCH FP MDC data frame (data portion). Further, control frame processing section 103 assembles an EDCH FP control response frame with the SN of the selected frame and Flash set therein for Nodes B other than the Node B to transmit the EDCH FP control response frame set with ACK to, and outputs the EDCH FP control response frame to L2/L1 section 101 so as to transmit the EDCH FP control response frame to the Nodes B. When, CRCIs from all Nodes B are not good, control frame processing section 103 assembles an EDCH FP control response frame with the SN of the selected frame and NACK set therein, and outputs the EDCH FP control response frame to L2/L1 section 101 so as to transmit the EDCH FP control response frame to all the Nodes B. Herein, CN is used to identify the frame.

MAC-d section 104 performs MAC processing for a dedicated channel on the MAC-d PDU inputted from data frame processing section 102, removes an MAC-d header and reconstructs RLC PDU, and outputs the RLC PDU to RLC section 105.

RLC section 105 checks the sequence number of the RLC header of the RLC PDU inputted from MAC-d section 104, and, when the number is regular, removes the RLC header and outputs the result to PDCP (Packet Data Convergence Protocol) section 106. Further, when RLC section 105 detects an irregularity of the sequence number such as missing of the sequence number of the RLC header, RLC section 105 returns RLC PDU with a retransmission request set therein, to RLC of the mobile terminal.

PDCP section 106 decompresses a compressed IP header of packet data inputted from RLC section 105 and reconstructs an IP packet, and outputs the packet to GTP-u (GRPS Tunneling Protocol for user plane) section 107.

GTP-u section 107 adds a GTP-u header for data transfer between RNC and CN to the IP packet inputted from PDCP section 106, and assembles GTP-u PDU and outputs it to L2/L1 section 108.

L2/L1 section 108 performs the processing of L2 and processing of L1 for wired transmission on the packet data inputted from GTP-u section 107 and outputs the result to CN via Iu interface.

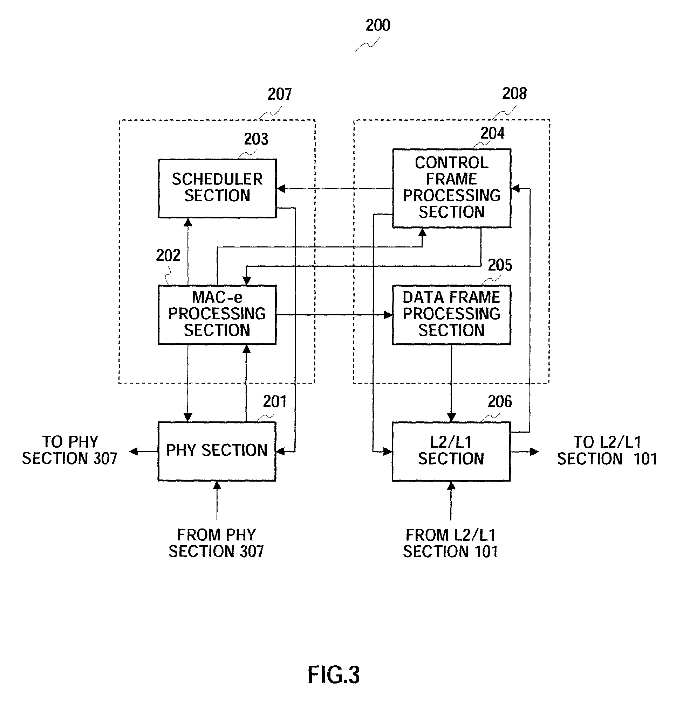

Referring to FIG.3, the configuration of Node B 200 according to Embodiment 1 of the present invention will be described next. FIG.3 is a block diagram illustrating a configuration of Node B200. MAC-e processing section 202 and scheduler section 203 form MAC-e section 207. Control frame processing 204 and data frame processing section 205 form EDCH FP section 208.

PHY section 201 performs the processing of L1 for wired transmission on packet data received from UE and outputs the result to MAC-e processing section 202. According to scheduling in scheduler section 203, PHY section 201 performs baseband processing and the like for wireless transmission by WCDMA on a transmission signal including a retransmission request signal inputted from MAC-e processing section 202.

MAC-e processing section 202 is a quality information generating means and demodulates the data inputted from PHY section 201, and performs HARQ decoding, error correction and the like and assembles MAC-d PDU. At this point, MAC-e processing section 202 outputs, as HARQ status information, CRCI information indicating the presence or absence of error in the EDCH FP MDC data frame by HARQ, QE quality information such as information of the estimated bit error rate in the EDCH FP MDC data frame by HARQ and the like, to control frame processing section 204. Further, MAC-e processing section 202 generates channel quality information (for example, CQI (Channel Quality Indicator)), which is information indicating channel quality of a radio channel in each UE, from the received data. Then, based on the generated channel quality information of radio channels with a plurality of UEs, MAC-e processing section 202 determines the transmission timing and modulation scheme used in transmission and the like for each UE, and outputs information of the determined transmission timing, information of the determined modulation scheme and the like, to PHY section 201 to report to the UE. Further, when instructed to output MAC-e PDU by SN from control frame processing section 204, MAC-e processing section 202 outputs assembled MAC-e PDU of the corresponding SN to data frame processing section 205. Meanwhile, when instructed to discard MAC-e PDU by SN from control frame processing section 204, MAC-e processing section 202 discards MAC-e PDU of the corresponding SN. Further, when instructed to perform a HARQ retransmission of MAC-e PDU by SN from control frame processing section 204, MAC-e processing section 202 outputs a retransmission request signal of data of the corresponding SN, to PHY section 201.

Scheduler section 203 performs scheduling, using the channel quality information inputted from MAC-e processing section 202 and the retransmission request inputted from control frame processing section 204 as information for scheduling. In other words, scheduler section 203 performs scheduling so that the transmission rate increases when channel quality is better, and performs scheduling according to the retransmission request inputted from control frame processing section 204. Then, scheduler section 203 outputs to PHY section 201 scheduling information, which is information of a result of the scheduling including information of the set transmission rate. In addition, when scheduler section 203 receives a retransmission request from control frame processing section 204, it is possible to set arbitrarily the timing for scheduling retransmission data. For example, scheduling can be delayed when retransmission data allows delay, while a retransmission request can be reflected in scheduling immediately after receiving the retransmission request when retransmission data does not allow delay.

From the HARQ status information inputted from MAC-e processing section 202, control frame processing section 204 assembles an EDCH FP MDC control frame including CRCI information and QE quality information and outputs the EDCH FP MDC control frame to L2/L1 section 206. Further, when an EDCH FP MDC control response frame is inputted from L2/L1 section 206, control frame processing section 204 outputs the information set in the EDCH FPMDC control response frame to scheduler section 203 and MAC-e processing section 202. More specifically, when HARQ operation of the inputted EDCH FP MDC control response frame is ACK indicating that the quality information included in the EDCH FP MDC control frame is better than for another station, control frame processing section 204 instructs MAC-e processing section 202 to output MAC-e PDU corresponding to the SN. By this means, control frame processing section 204 can control an EDCH FP MDC data frame to be transmitted from L2/L1 section 206 when receiving an EDCH FP MDC control response frame including information indicating that the quality information included in the EDCH FP MDC control frame is better than for another station. Further, when HARQ operation of the inputted EDCH FP MDC control response frame is NACK, control frame processing section 204 instructs MAC-e processing section 202 to perform a HARQ retransmission of MAC-e PDU corresponding to the SN. Meanwhile, when HARQ Operation of the inputted EDCH FP MDC control response frame is Flash, control frame processing section 204 instructs MAC-e processing section 202 to discard MAC-e PDU corresponding to the SN.

From the MAC-e PDU inputted from MAC-e processing section 202, data frame processing section 205 assembles an EDCH FP MDC data frame and outputs the EDCH FP MDC data frame to L2/L1 section 206 for each TTI.

L2/L1 section 206 performs the processing of L2 and processing of L1 for wired transmission on the EDCH FP MDC data frame inputted from data frame processing section 205 and transmits the result to RNC via Iub/Iur interface. Further, L2/L1 section 206 performs the processing of L2 and processing of L1 for wired transmission on the EDCH FP MDC control frame inputted from control frame processing section 204 and transmits the result to RNC via Iub/Iur interface. Meanwhile, L2/L1 section 206 performs the processing of L1 and processing of L2 on the EDCH FP MDC control response frame inputted from RNC via Iub/Iur interface and outputs the result to control frame processing section 204.

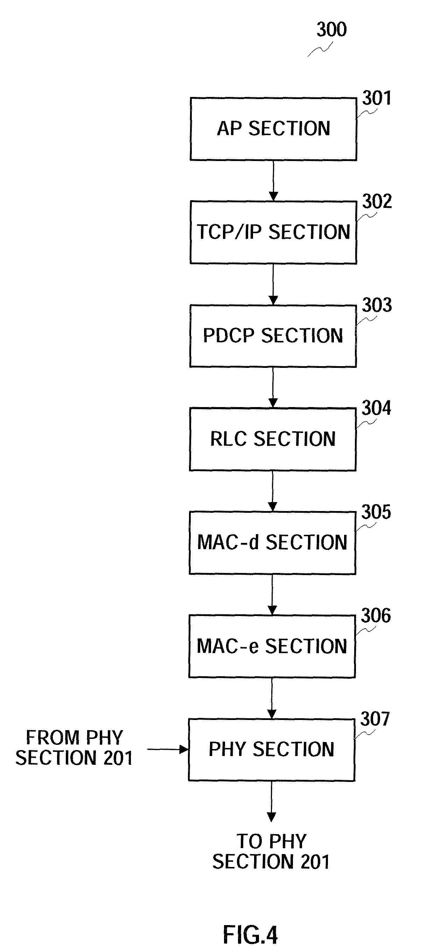

Referring to FIG.4, the configuration of UE 300 according to Embodiment 1 of the present invention will be described. FIG.4 is a block diagram illustrating the configuration of UE 300.

AP section 301 generates data and outputs the data to TCP/IP section 302. TCP is a protocol having functions such as flow control for controlling the transmission amount of data, retransmission control and the like.

TCP/IP section 302 adds a TCP header and the like including a sequence number for retransmission control by TCP to the data inputted fromAP section 301 and outputs the result to PDCP section 303.

PDCP section 303 performs compression of an IP header of an IP packet inputted from TCP/IP section 302 and the like and outputs the result to RLC section 304.

RLC section 304 adds an RLC header and the like including a sequence number and the like for retransmission control to the packet data inputted from PDCP section 303, and assembles RLC PDU and outputs RLC PDU to MAC-d section 305.

MAC-d section 305 adds a MAC-d header and the like required for MAC processing of the dedicated channel to the RLC PDU inputted from RLC section 304 and outputs the result to MAC-e section 306.

Based on the scheduling information reported from the base station apparatus, MAC-e section 306 performs processing such as HARQ coding, adaptive modulation and the like on the MAC-d PDU inputted from MAC-d section 305 and assembles MAC-e PDU. Then, MAC-e section 306 outputs the MAC-e PDU to PHY section 307 at the transmission timing reported in the scheduling information.

PHY section 307 performs baseband processing and the like for wireless transmission by WCDMA on the data inputted from MAC-e section 306 and transmits the result to Node B via Uu interface.

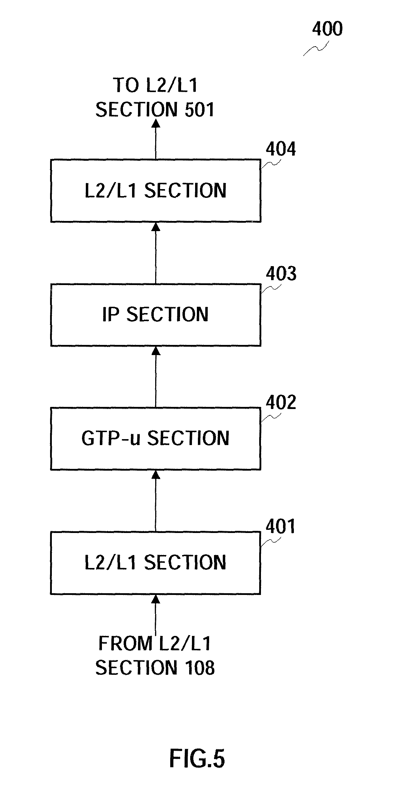

The configuration of CN 400 will be described below with reference to FIG.5. FIG.5 is a block diagram illustrating the configuration of CN 400.

L2/L1 section 401 performs the processing of L2 and processing of L1 for wired transmission on inputted packet data transmitted from the RNC and reconstructs GTP-u PDU. Then, L2/L1 section 401 outputs the reconstructed GTP-u PDU to GTP-u section 402.

GTP-u section 402 removes a GTP-u header from the GTP-u PDU inputted from L2/L1 section 401 and reconstructs an IP packet. Then, GTP-u section 402 outputs the reconstructed IP packet to IP section 403.

IP section 403 performs IP routing processing and the like on the IP packet inputted from GTP-u section 402 and outputs the result to L2/L1 section 404.

L2/L1 section 404 performs the processing of L2 and processing of L1 for wired transmission on the packet data inputted from IP section 403 and outputs the result to TE via Gi interface.

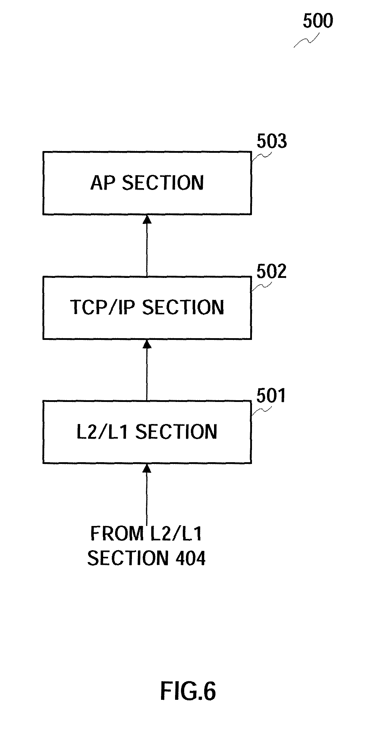

Referring to FIG.6, the configuration of TE 500 according to Embodiment 1 of the present invention will be described next. FIG.6 is a block diagram illustrating the configuration of TE 500.

L2/L1 section 501 performs the processing of L2 and processing of L1 for wired transmission on inputted packet data transmitted from the CN and reconstructs an IP packet. Then, L2/L1 section 501 outputs the reconstructed IP packet to TCP/IP section 502.

TCP/IP section 502 removes an IP header and the like from the IP packet inputted from L2/L1 section 501, while analyzing the sequence number and the like of the TCP header. When the analysis result of the sequence number of the TCP header is normal, TCP/IP section 502 removes the TCP header from the packet data and outputs the result to AP section 503. Meanwhile, when TCP/IP section 502 detects an irregularity of the sequence number of the TCP header such as missing of the sequence number of the TCP header in the analysis of the sequence number of the TCP header, TCP/IP section 502 assembles an ACK TCP packet set with the latest correctly received sequence number and returns the result to the TCP section of TCP/IP section 302 in UE 300. Further, TCP/IP section 502 performs flow control, retransmission control and the like together with TCP/IP section 302 of UE 300 and controls the transmission amount of data.

AP section 503 acquires desired data from the packet data inputted from TCP/IP section 502.

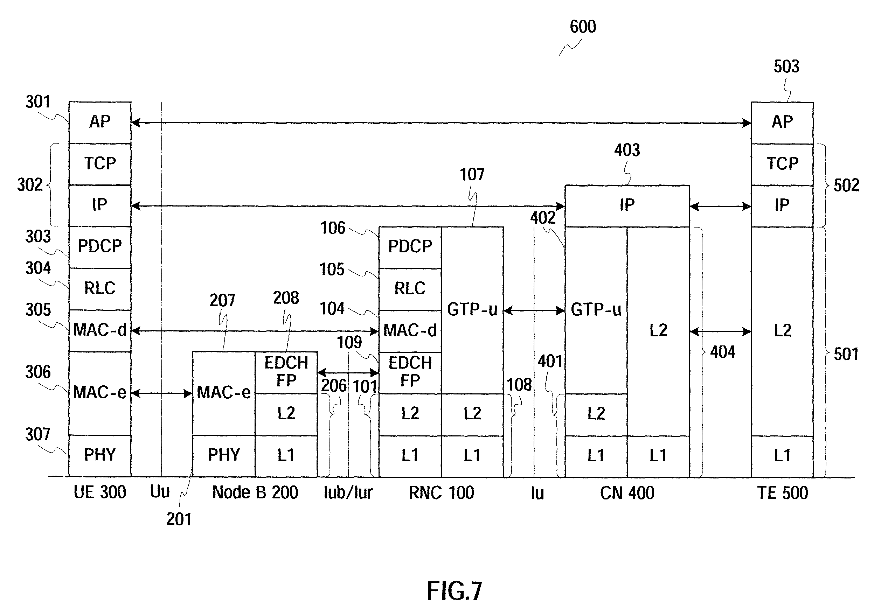

Referring to FIG.7, the operation of UE 300 when performing macro diversity communication with a plurality of Nodes B 200 in packet communication system 600 using RNC100, Nodes B 200, UE300, CN 400 and TE 500. In addition, in FIG.7, protocols to perform the same protocol processing as the protocol processing performed in the configurations shown in FIG.2 to FIG.6 are assigned the same reference numerals as in the configurations shown in FIG.2 to FIG.6.

Data generated in AP 301 in UE 300 is given in TCP/IP 302 a TCP header and the like including a sequence number for retransmission control by TCP, and assembled into an IP packet in IP. The IP packet is subjected to compression of an IP header and the like in PDCP 303, further added in RLC 304 an RLC header and the like including a sequence number for retransmission control, and assembled into RLC PDU. The RLC PDU is added in MAC-d 305 a MAC-d header and the like required for MAC processing of the dedicated channel, subjected to processing such as HARQ coding, adaptive modulation and the like according to a modulation scheme and coding rate reported as the scheduling information from MAC-e 207 of Node B 200, thus assembled into MAC-e PDU, and is sent to PHY 307 at the transmission timing and transmission rate according to the instructions of the transmission timing and transmission rate reported as the scheduling information from MAC-e 207 of Node B 200. MAC-e PDU is subjected to the baseband processing for wireless transmission by WCDMA in PHY 307, and transmitted to Node B 200 via a radio channel (Uu interface).

Node B 200 performs the baseband processing for wireless transmission by WCDMA in PHY 201, and further performs processing such as demodulation, HARQ decoding/error correction and the like in MAC-e 207.

Further, MAC-e 207 determines transmission timing of each UE 300, transmission rate used in transmission and the like from the channel state of the radio channels with a plurality of UEs 300 and HARQ Operation information reported from EDCH FP 208 and reports these to MAC-e 306 in UE 300.

When MAC-d PDU is inputted from MAC-e 207, data frame processing section 205 of EDCH FP 208 assembles an EDCH FP MDC data frame. Then, L2/L1 206 performs the processing of L2 and processing of L1 for wired transmission, and the result is transmitted to RNC 100 via Iub/Iur interface. Further, control frame processing section 204 of EDCH FP 208 assembles an EDCH FP MDC control frame from the status information of HARQ inputted from MAC-e processing section 202 and outputs the EDCH FP MDC control frame to L2/L1 206. Meanwhile, when an EDCH FP MDC control response frame is inputedt from L2/L1 206, control frame processing section 204 of EDCH FP 208 outputs the set information to scheduler section 203 and MAC-e processing section 202 of MAC-e 207.

RNC 100 performs in L2/L1 101 the processing of L2 and processing of L1 for wired transmission and reconstructs EDCH FP PDU.

Further, when an EDCH FP MDC control frame is inputted from L2/L1 101, control frame processing section 103 of EDCH FP 109 generates an EDCH FPMDC control response frame set with HARQ operation from the information of CRCI and QE set in the EDCH FP MDC control frame and outputs the EDCH FP MDC control frame to L2/L1 108.

Data frame control section 102 of EDCH FP 109 assembles MAC-d PDU from the EDCH FPMDC data frame inputted from L2/L1 101 and outputs MAC-d PDU to MAC-d 104.

In MAC-d 104, MAC-d PDU is subjected to MAC processing for the dedicated channel, has MAC-d header removed and is reconstructed to RLC PDU. In RLC 105, RLC PDU has the sequence number of RLC header checked, and, when the sequence number is normal, has RLC header removed, and, in PDCP 106, has compressed IP header extended and is reconstructed to IP packet.

In RLC 110, when an irregularity is detected with the sequence number of RLC header, such as absence of the sequence number of RLC header, RLC PDU that is set with a retransmission request, is returned to RLC 304 of UE 300. Upon receiving the RLC PDU set with the retransmission request, RLC 304 of UE 300 immediately transmits this RLC PDU again to RLC 105 of RNC 100. By this means, it is possible to recover the RLC PDU discarded in Uu and Iub/Iur.

The IP packet is added in GTP-u 107 a GTP-u header for data transfer between RNC 100 and CN 400 and assembled into GTP-u PDU. Then, L2/L1 108 performs the processing of L2 and processing of L1 for wired transmission on the PDU and transmits the result to CN 400 via Iu interface.

At CN 400, in L2/L1 401, processing of L2 and processing of L1 for wired transmission are performed, and the result is reconstructed to GTP-u PDU. In GTP-u 402, GTP-u PDU has GTP-u header removed and is reconstructed to IP packet. The IP packet is subjected to IP routing processing and the like in IP 403 and further subjected to the processing of L2 and processing of L1 for wired transmission in L2/L1 404, and the result is transmitted to TE 500 via Gi interface.

At TE 500, in L2/L1 501, processing of L2 and processing of L1 for wired transmission are performed, and the result is reconstructed to IP packet. In TCP/IP 502, IP packet has IP header removed, and the sequence number of TCP header is analyzed, and, when the analysis result is normal, TCP header is removed and data is passed to AP 503.

In TCP/IP 502, when an irregularity with the sequence number of TCP header is detected (such as absence of the sequence number of TCP header), ACK TCP packet, which is set with the latest correctly received sequence number, is assembled and returned to TCP/IP 302 of UE 300. TCP/IP 302 of UE 300, when receiving ACK TCP packet set with the same sequence number three consecutive times, determines that IP packet is discarded in network, retransmits TCP packet having the next sequence number of the sequence number set in ACK TCP packet, and, at the same time, determines that the network is congested, operates fast retransmission function and lowers transmission rate of TCP/IP 302 and 502.

The RNC receives the status of HARQ from HARQ of a plurality of Nodes B in each HARQ processing cycle (TTI), and returns the presence or absence of retransmission execution to HARQ of Node B, and the data is transferred to the RNC from the Node B also in each HARQ processing cycle (TTI).

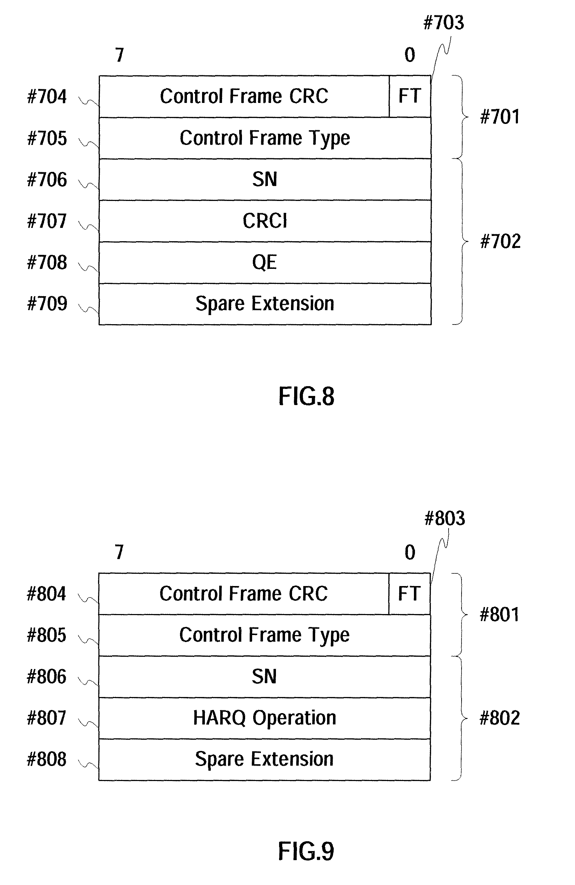

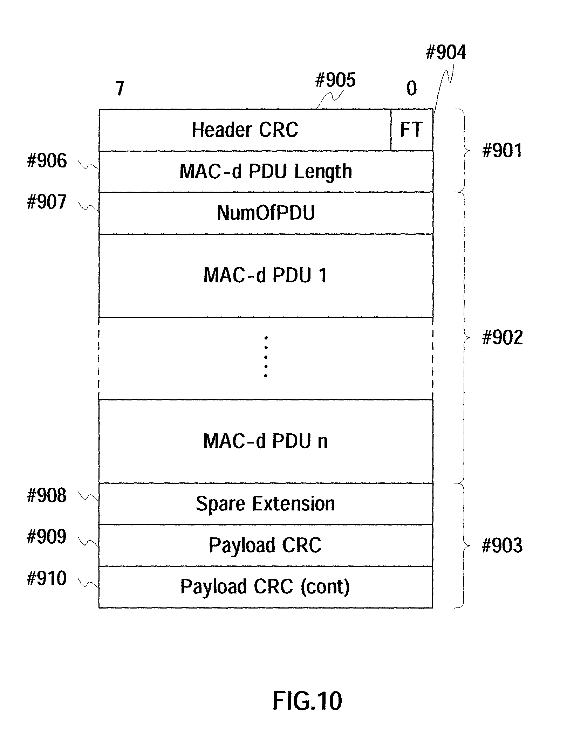

Frame configurations will be described below with reference to FIG.8 to FIG.10. FIG.8 is a diagram illustrating a configuration of the EDCH FP MDC control frame; FIG.9 is a diagram illustrating a configuration of the EDCH FP MDC control response frame; and FIG.10 is a diagram illustrating a configuration of the EDCH FP MDC data frame.

The header portion and tail portion are common to each frame and will be described first. Header portion #701 of the control frame in FIG.8 and header portion #801 of the control frame in FIG.9 are comprised of FT fields #703 and #803 indicating whether the frame is a control frame or data frame, control frame CRC fields #704 and #804 for error detection for the control frame, and control frame type fields #705 and #805 indicating the type of the control frame. Header portion #901 of the data frame in FIG.10 is comprised of header CRC field #905 for error detection of header portion #901, MAC-d PDU length field #906 indicating the length of each MAC-d PDU, and NumOfPDU field #907 indicating the number of MAC-d PDUs in the frame.

Further, tail portion #903 of the data frame in FIG.10 is comprised of Spare Extension field #908 for future extension, Payload CRC field #909 for error detection of the payload portion, and Payload CRC field #910 for error detection of the payload portion.

The payload portion of each frame will be described below. In FIG.8, payload portion #702 in the EDCH FP MDC control frame is comprised of SN field #706 indicating a sequence number to identify the MAC-e PDU, and CRCI #707 and QE field #708 as HARQ status information section of the MAC-e section. CRCI #707 is CRCI information of data by HARQ. QE #708 is information indicating the estimated bit error rate of data by HARQ. CRCI #707 and QE #708 are examples of HARQ status information, and other information maybe used. Further, FIG.8 shows HARQ status information for a single MAC-e PDU. However, the status information for a plurality of UEs or a plurality of MAC-e PDUs may be set.

In FIG.9, payload portion #802 in the EDCH FP MDC control response frame is comprised of SN field #806 in which the SN for identifying MAC-e PDU is set, and HARQ operation field #807 for instructing the operation from RNC 100 to the HARQ section of Node B 200. HARQ Operation field #807 is capable of using three values, namely ACK, NACK and Flash. The SN set in SN field #806 is referred to when Node B 200 receives an EDCH FP MDC control response frame to determine whether or not Node B 200 is allowed to transmit an EDCH FP MDC data frame to RNC 100.

In FIG.10, Payload portion #902 in the EDCH FP MDC data frame is to set the MAC-d PDU in one TTI in MAC-d PDU 1~n field to transfer.

When UE 300 communicates with only a single Node B 200 without performing macro diversity communication, HARQ of MAC-e processing section 202 of Node B 200 is only required to perform HARQ based on the status of HARQ of Node B 200. In other words, Node B 200 performs HARQ retransmission when data received fromUE 300 has an error, while finishing HARQ and transmitting the data to RNC 100 when the data received from UE 300 does not have any error.

However, when UE 300 is in state of macro diversity communication with a plurality of Nodes B 200, cases may occur where, even when an error exists in data in HARQ of MAC-e processing section 200 of the Node B 200, no error exists in the data in HARQ of MAC-e processing section 202 in another Node B 200. Therefore, in the state of macro diversity communication, HARQ in each of MAC-e processing sections 202 of a plurality of Nodes B 200 does not perform HARQ retransmission immediately when the data has an error, and, instead, once reports the current state to higher RNC 100, and RNC 100 checks the HARQ status of each of MAC-e processing sections 202 of all the Nodes B 200, and instructs whether or not to execute HARQ retransmission in HARQ in MAC-e processing section 202 in the Node B 200.

Thus, according to Embodiment 1, Node B first transmits an EDCH FP MDC control frame to RNC, and RNC refers to CRCI information and QE included in the EDCH FP MDC control frame, and selects a base station apparatus capable of transmitting an EDCH FP MDC data frame with the best quality and have the EDCH FP MDC data frame transmitted therefrom, so that it is possible to reduce increase in the amount of traffic, and prevent increase in overhead in data transfer even when transmission time intervals are made shorter.

### (Embodiment 2)

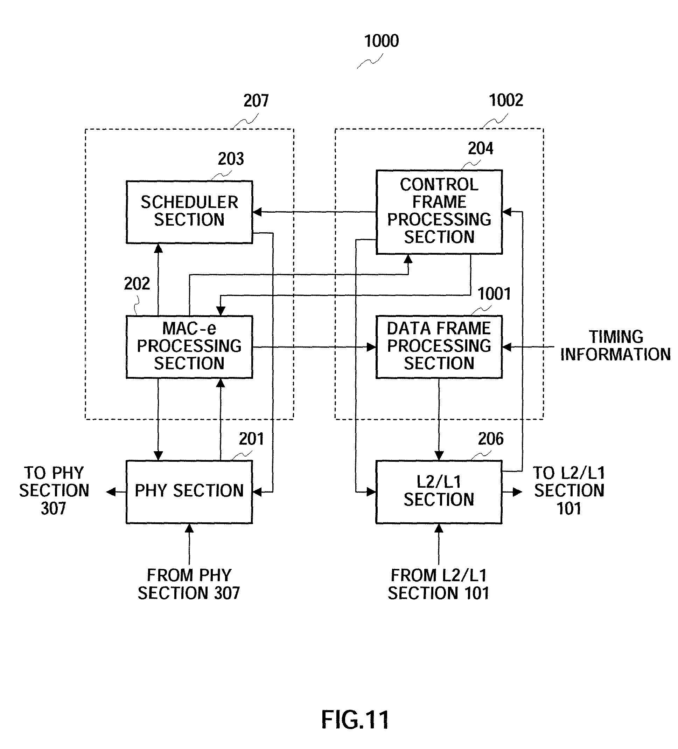

FIG.11 is a block diagram illustrating a configuration of Node B 1000 according to Embodiment 2 of the present invention.

Node B 1000 according to Embodiment 2 has data frame processing section 1001 in Node B 200 according to Embodiment 1 shown in FIG.3, instead of data frame processing section 205, as shown in FIG.11. In addition, in FIG.11, the same sections as in FIG.3 are assigned the same reference numerals and therein descriptions will be omitted.

In FIG.11, control frame processing section 204 and data frame processing section 1001 constitute EDCH FP section 1002.

Data frame processing section 1001 assembles an EDCH FP MDC data frame from the MAC-d PDU inputted from MAC-e processing section 202 and outputs the EDCH FP MDC data frame L2/L1 section 206. At this point, EDCH FP data frame control section 1001 once stores MAC-d PDUs from MAC-e processing section 202 corresponding to a plurality of TTIs, and outputs a plurality of MAC-d PDUs as a single EDCH FP MDC user frame to L2/L1 section 206 at the timing the timing information is inputted.

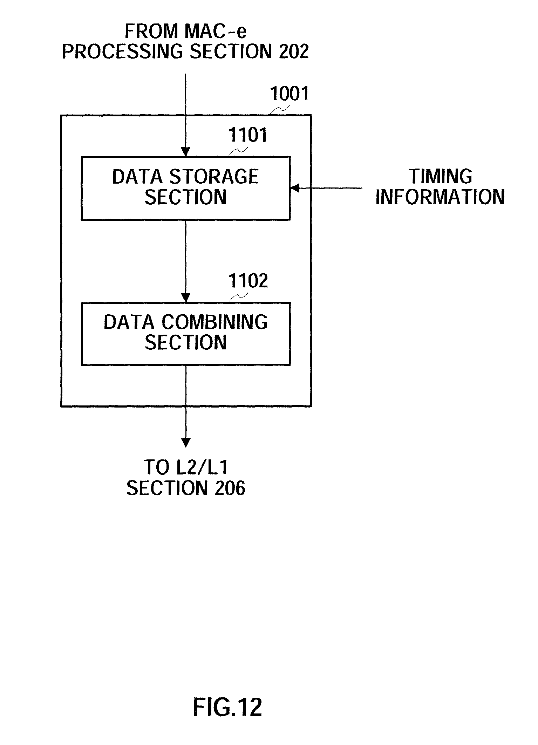

A specific configuration of data frame processing section 1001 will be described below with reference to FIG.12. FIG.12 is a block diagram illustrating the configuration of data frame processing section 1001.

Data storage section 1101 stores MAC-d PDUs inputted from MAC-e processing section 202 for predetermined time, and when receiving the timing information indicative of an elapse of predetermined time from a timer (not shown), outputs stored MAC-d PDUs to data combining section 1102.

Data combining section 1102 collects MAC-d PDUs within the predetermined time inputted from data storage section 1101 and outputs the MAC-d PDUs as a single EDCH FP MDC user frame to L2/L1 section 206. At this point, the MAC-d PDUs collected as a single EDCH FP MDC user frame in data combining section 1102 are MAC-d PDUs for a plurality of TTIs. In addition, when data combining section 1102 receives only MAC-d PDUs for one TTI until timing information is inputted, data combining section 1102 outputs MAC-d PDUs for one TTI to L2/L1 section 206 as an EDCH FP MDC user frame.

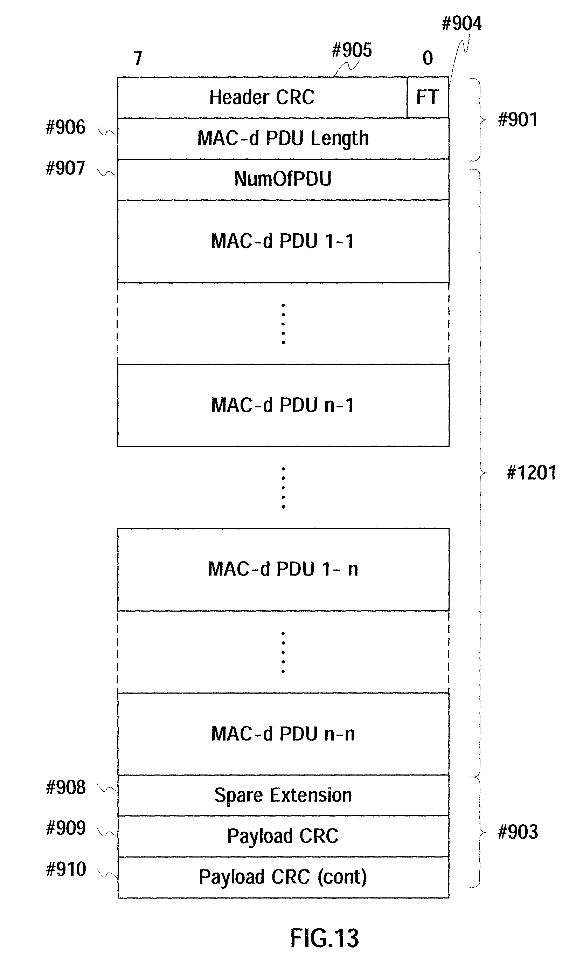

FIG.13 is a diagram illustrating a configuration of the EDCH FP MDC data frame. In addition, the same portions as in FIG.10 are assigned the same reference numerals and therein descriptions will be omitted.

Payload portion #1201 in the EDCH FPMDC data frame is sets MAC-d PDUs of a plurality of TTIs in MAC-d PDU 1~n fields to transfer. In other words, MAC-d PDU 1-1 to MAC-d PDU 1-n are MAC-d PDUs in one TTI. Similarly, MAC-d PDU 1-n to MAC-d PDU n-n are MAC-d PDUs in one TTI, and MAC-d PDU 1-1 to MAC-d PDU n-n are set in MAC-d PDU 1~n fields.

HARQ status report from the Node B to the RNC and the presence or absence of execution of retransmission from the RNC to the Node B are sent each HARQ cycle (TTI) to suppress delay of HARQ. However, for data transfer from the Node B to the RNC, data corresponding to a plurality of HARQ cycles (TTIs) is collectively transferred to the RNC in a single time.

Thus, according to Embodiment 2, in addition to the advantage of Embodiment 1, since MAC-d PDUs of a plurality of TTIs are collectively transmitted in a single time, it is possible to decrease the number of data frames received per TTI in the RNC, reduce the processing capability of the RNC, decrease overhead information such as the IP header in transferring the data frame, and reduce increase in the amount of traffic between the Node B and the RNC. In addition, according to Embodiment 2, for data transfer from the Node B to the RNC, since data corresponding to a plurality of HARQ cycles (TTIs) is collectively transferred, it is possible to prevent delay from accumulating by the number of retransmissions, and further prevent the delay time from increasing substantially.

In addition, with Embodiment 2, MAC-e processing section 202 outputs the MAC-d PDU to data frame processing section 205 when instructed to output from control frame processing section 204. However, the invention is not limited thereto, and MAC-e processing section 202 may output the MAC-d PDU to data frame processing section 205 at predetermined timing, irrespective of the presence or absence of the instruction on output from control frame processing section 204.

In above-mentioned Embodiments 1 and 2, Node B to transmit an EDCH FP MDC data frame is selected using CRCI information and QE included in an EDCH FP MDC control frame, but the invention is not limited thereto. Node B to transmit an EDCH FP MDC data frame may be selected using one of CRCI information and QE or may be selected based on any information indicating the quality of the EDCH FP MDC data frame other than CRCI information and QE.

The present application is based on Japanese Patent Application No.2004-132976 filed on April 28, 2004, entire content of which is expressly incorporated by reference herein.

### Industrial Applicability

A control station apparatus, base station apparatus, reception method, transmission method and communication method according to the present invention provide advantages of reducing increases in the amount of traffic, and preventing increase in overhead in data transfer even when transmission time intervals are made shorter, and are useful in enabling high-speed of packet communication.

## Claims

1. A control station apparatus comprising:
an acquirer that receives, from base station apparatuses, a control information portion of packet data including information of a data portion of the packet data, before receiving the data portion;
a control frame processor that instructs a base station apparatus transmitting the quality information of best quality to transmit the data portion, among the quality information indicating quality of the data portion included in the control information portion received in the acquirer; and
a data frame processor that performs predetermined protocol processing on the data portion transmitted from the base station apparatus instructed by the control frame processor to transmit the data portion.

2. A base station apparatus comprising:
a quality information generator that generates quality information comprising information indicating quality of a data portion of packet data;
a data frame processor that generates the data portion of the packet data to transmit to a control station apparatus;
a control frame processor that generates a control information portion of the packet data including the quality information generated in the quality information generator; and
a transmitter that transmits the control information portion generated in the control frame processor and the data portion generated in the data frame processor to the control station apparatus,
wherein the control frame processor performs control such that the transmitter transmits the data portion when information is received indicating that the quality information included in the control information portion transmitted from the transmitter is better than the quality information for another base station apparatus.

3. The base station apparatus according to claim 2, wherein:
the data frame processor combines data portions of a plurality of packet data and generates combined data; and
the transmitter transmits the data portions in the combined data.

4. A reception method comprising the steps of:
receiving, from base station apparatuses, a control information portion of packet data including information of a data portion of the packet data, before receiving the data portion;
instructing a base station apparatus transmitting the quality information of best quality to transmit the data portion, among the quality information indicating quality of the data portion included in the control information portion received; and
performing predetermined protocol processing on the data portion transmitted from the base station apparatus instructed to transmit the data portion.

5. A transmission method comprising the steps of:
generating quality information comprising information indicating quality of a data portion of packet data;
generating the data portion of the packet data to transmit to a control station apparatus;
generating a control information portion of the packet data including the generated quality information; and
transmitting the generated control information portion and data portion to the control station apparatus,
wherein control is performed such that the data portion is transmitted when information is received indicating that the quality information included in the transmitted control information portion is better than the quality information for another base station apparatus.

6. The transmission method according to claim 5, wherein:
data portions of a plurality of packet data are combined to generate combined data; and
the data portions are transmitted in the combined data.

7. A communication method comprising the steps of:
generating a data portion of packet data to transmit to a control station apparatus;
generating quality information comprising information indicating quality of the data portion;
generating a control information portion of the packet data including the generated quality information and information of the data portion;
transmitting the generated control information portion to the control station apparatus from a plurality of base station apparatuses;
receiving in the control station apparatus the control information portion from the plurality of base station apparatuses;
instructing a base station apparatus transmitting the quality information of best quality to transmit the data portion, among the quality information indicating quality of the data portion included in the control information portion received; and
transmitting the data portion from the base station instructed by the control station apparatus to transmit the data portion; and
performing predetermined protocol processing on the data portion transmitted from the base station apparatus instructed to transmit the data portion.

## Amended claims

### Amended claims under Art. 19.1 PCT

**8.** (Added) A control station apparatus comprising:
an acquirer that receives, from base station apparatuses, a control information portion of packet data including information of a data portion of the packet data, before receiving the data portion;
a first control frame processor that instructs a base station apparatus transmitting the quality information of best quality to transmit the data portion; and
a data frame processor that performs predetermined protocol processing on the data portion transmitted from the base station apparatus instructed by the first control frame processor to transmit the data portion.

**9.** (Added) A base station apparatus communicating with the control station apparatus according to claim 8, the base station apparatus comprising:
a quality information generator that generates the quality information;
a data frame processor that generates the data portion;
a second control frame processor that generates the control information portion including the quality information generated in the quality information generator; and
a transmitter that transmits the control information portion generated in the second control frame processor to the control station apparatus and transmits the data portion generated in the data frame processor to the control station apparatus when instructed from the control station apparatus to transmit the data portion.

**10.** (Added) The base station apparatus according to claim 9, wherein:
the data frame processor combines data portions of a plurality of packet data and generates combined data; and
the transmitter transmits the data portions in the combined data.

**11.** (Added) A communication method comprising the steps of:
receiving, from base station apparatuses, a control information portion of packet data including quality information indicating quality of a data portion of the packet data;
instructing a base station apparatus transmitting the quality information of best quality to transmit the data portion; and
performing predetermined protocol processing on the data portion transmitted from the base station apparatus instructed to transmit the data portion.

**12.** (Added) A communication method comprising the steps of:
generating a data portion of packet data to transmit to a control station apparatus;
generating quality information comprising information indicating quality of the data portion;
generating a control information portion of the packet data including the generated quality information;
transmitting the generated control information portion to the control station apparatus from a plurality of base station apparatuses;
receiving at the control station apparatus the control information portion from the plurality of base station apparatuses;
instructing a base station apparatus transmitting the quality information of best quality to transmit the data portion, among the quality information included in the received control information portion;
transmitting the data portion instructed to be transmitted by the control station, from the base station apparatus to the control station apparatus; and
performing predetermined protocol processing on the data portion transmitted from the base station apparatus instructed to transmit the data portion.
